# EUROPEAN PATENT SPECIFICATION

(11) **EP 1 786 257 B1**
(45) Date of publication and mention of the grant of the patent: **10.07.2013**
(21) Application number: 05778041.3
(22) Date of filing: 08.09.2005
(51) Int. Cl.: A01C 7/20, A01C 5/06

(54) **SEED COULTER**
SÄSCHAR
COUTRE DE SEMOIR

(30) Priority: 09.09.2004 SE 0402193
(43) Date of publication of application: 23.05.2007
(73) Proprietor: Väderstad-Verken AB, 590 21 Väderstad (SE)
(72) Inventor: FRANSSON, Jörgen, S-595 51 Mjölby (SE); KJELLSSON, Mats, S-242 92 Hörby (SE)
(74) Representative: Börlin, Maria
(86) International application number: PCT/SE2005/001297
(87) International publication number: WO 2006/041360

(56) References cited:
- EP-A1- 0 401 593
- DE-A1- 2 063 225
- DE-A1- 2 063 225
- DE-A1- 4 310 498
- US-A- 4 669 922
- US-A- 4 998 488
- US-A- 6 142 085

## Description

The invention refers to a seed coulter according to the ingress of Claim 1.

### Background of the invention

Current seed drills are often provided with a number of seed coulters comprising a coulter tip which, often in combination with a disc or other, creates a seed furrow in the soil into which seed is conducted through a seed pipe arranged precisely behind the coulter tip. The seed tube is in its turn connected to a seed container via hoses or similar. Metering can take place either mechanically or pneumatically.

In certain operating events there sometimes arises non-uniform distribution of the seed in the seed furrow, so-called clump sowing. This can be caused by the seeds bouncing in the seed pipe before the outlet and often arises on driving at high speed and/or with a high incidence of stones or clods. The problem is more obvious in seed drills with mechanical distribution systems and low seed speeds in seed hoses and -coulters.

US 6142085 discloses a seed coulter according to the preamble of claim 1.

### Aims of the invention

The aim of the invention is to provide a seed coulter where the risk of clump sowing is minimised or avoided. It is desirable with such a simple and cost-effective solution with as few changes to the rest of the seed drill as possible.

### Summary of the invention

The aim of the invention above is solved by the features according to Claim 1. By displacing the lower part of the front wall of the seed pipe forwards, the risk is minimised considerably of a strong movement backwards in the coulter tip, such as a stone impact, leading to the front wall 'hitting' the seeds backwards in the pipe which leads to the downward movement of the seeds being slowed which in its turn can lead to clump sowing. Displacement of the front wall means that a smaller proportion of the seed flow is exposed to any vibrations at all. Through the longer distance between the walls the seeds lose more energy between bounces whereby the seed flow is less disrupted.

Claim 2 describes a preferred embodiment with a displacement of 10-20 mm.

Through a device according to Claim 3 an advantageous embodiment is achieved with relatively seen low opening in the rear wall which gives low risk of the seeds meeting the front wall and bouncing directly out through the aperture and thus risking missing the bottom of the seed furrow.

Claim 4 describes a further preferred embodiment that minimises the risk of the seeds bouncing forward and back between the front and rear walls repeated times, while Claims 5 and 6 describe further preferred detail embodiments.

Further characteristics and advantages of the invention are described below with the help of an embodiment example with reference to the attached drawings.

### Drawing summary

Figure 1 shows a seed drill.
Figure 2 shows a side view of a seed coulter arranged at a disc entity.
Figure 3 shows a view of a seed coulter according to Figure 2 viewed diagonally from below.
Figures 4a-d show a number of preferred cross-sections of the seed pipe.

### Description of an embodiment example

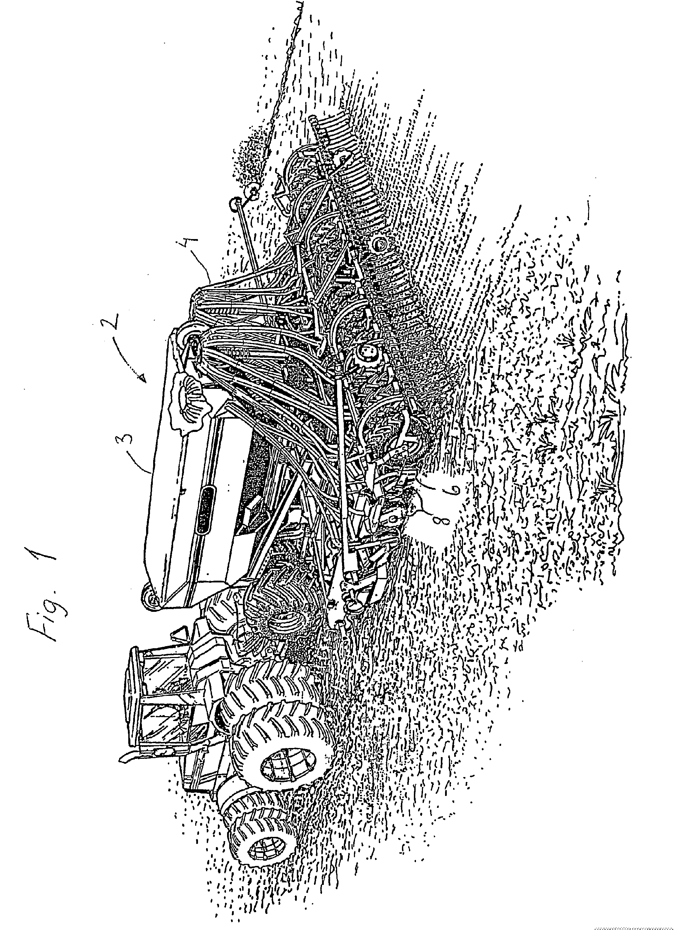

Figure 1 shows a pneumatic seed drill 2. A seed container 3 is connected with seed coulters 6 according to the invention via a number of hoses 4. Each seed coulter 6 is arranged at a disc entity 8.

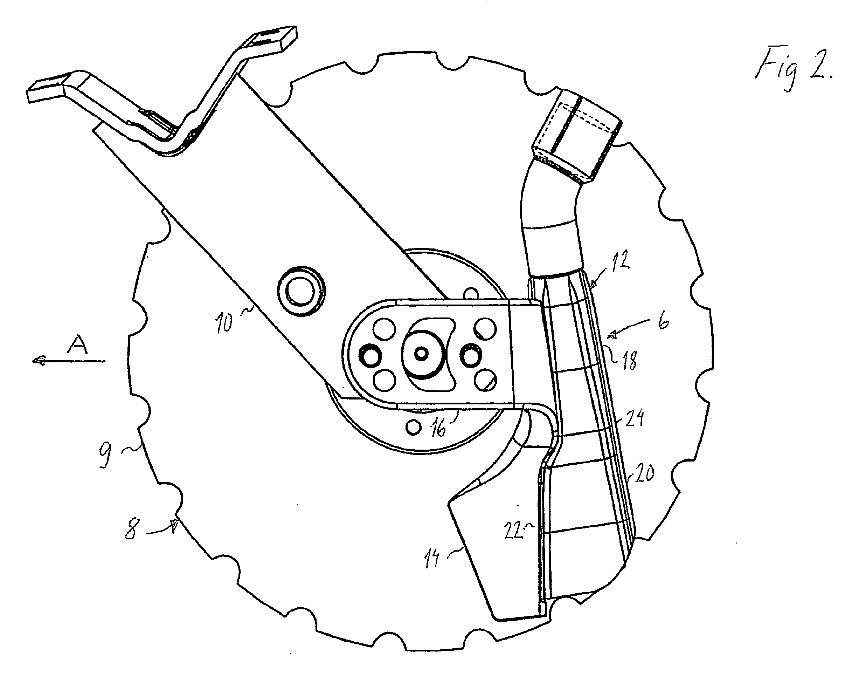

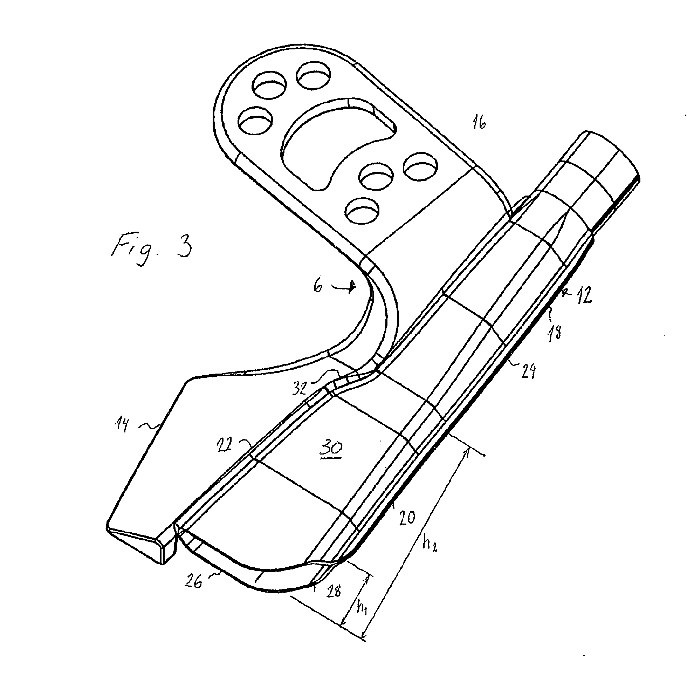

In Figure 2 is shown a side view of a seed coulter 6 arranged at a disc entity 8. The disc entity 8 comprises a disc 9 mounted at a disc arm 10 which is suspended with spring at the frame of the seed drill. The seed coulter 6 is also mounted at the disc arm 10 and its form is apparent in Figures 2 and 3.

The seed coulter 6 comprises a seed pipe 12 fixed at a coulter tip 14. The lower part 20 of the seed pipe 12 is situated behind the coulter tip 14 in the working direction A of the seed drill. The coulter tip is integrated with a fastening 16 in the same moulded part. The fastening is mounted at the disc arm 10 and its hole pattern allows in a known way adjustment to different height positions e.g. depending on the wear of the disc 9. The coulter tip 14 together with the slightly angled disc 9 creates a seed furrow.

The seed pipe 12 comprises an upper part 18 and a lower part 20 with an outlet 26. The seed pipe comprises a front wall 22, a rear wall 24 and two side walls 30. Walls 22, 24, 30 can be comprised of a common entity or several conjoined parts. According to a preferred embodiment the seed pipe 12 is comprised of two components, a right-hand part and a left-hand part, which are conjoined. Each part then comprises a side wall and half the front and rear wall.

According to the invention, the front wall 22 is displaced forwards in the lower part 20 of the seed pipe 12 relative to its upper part 18, so that the distance between the front 22 and the rear wall 24 is larger in the lower part 20 of the seed pipe 12 than in its upper part 18. Trials have shown that a displacement of 10-12 mm gives good sowing result. The lower part of the front wall 22 does not necessarily have to be parallel to the upper part. However it has been shown that a pronounced transition, here in the area marked 32, gives the best result.

The rear wall 24 of the seed coulter 6 is essentially straight along the entire seed pipe 12 and in its lower end is provided with a little opening 28 or slit that allows placement of the seed in the seed furrow. According to a preferred embodiment the height h₂ of the displaced part of the front wall 22 is 2-4 times larger than the height h₁ of the opening 28.

A smaller difference between the heights h₁, h₂ means at low heights (small part of the front wall 22 displaced forward) greater risk of the seeds bouncing forward and back between the front 22 and rear wall 24. At high heights (high opening 28) the risk is greater that the seeds bounce directly out through the opening 28 and thereby risk missing the bottom of the seed furrow, or end up in clumps with other previously released seeds.

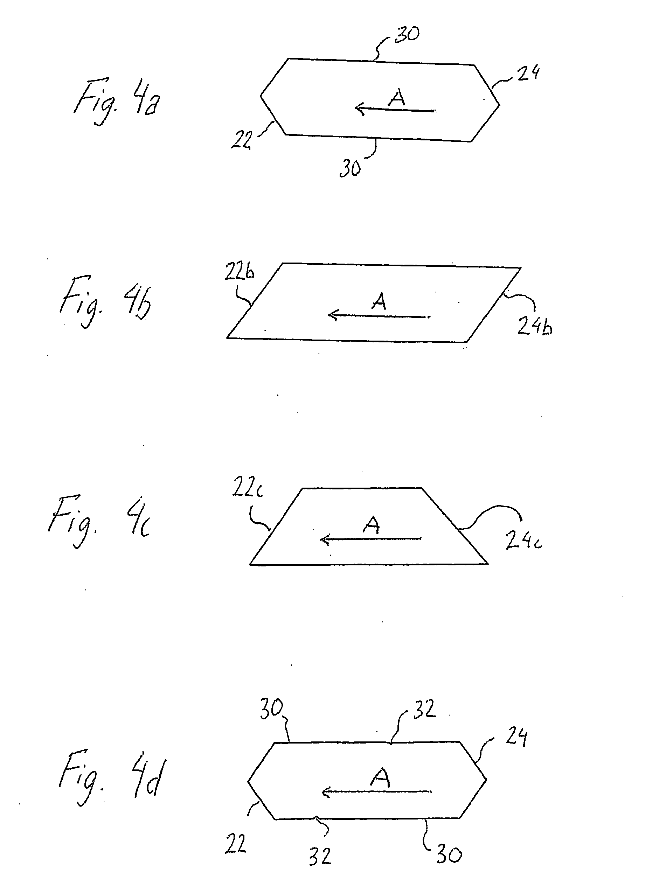

The cross-section of the seed pipe 12 is apparent in Figure 4a. Here it is apparent that both the front 22 and rear wall 24 are shaped with two parts angled relative to each other. This hereby prevents a seed with direction of movement in or against the working direction A of the seed coulter 6 on a bounce at one of the front or rear walls acquiring a new direction of movement that prevents the seed directly hitting the other of the rear or front walls whereby the risk for repeated bounces is minimised.

The direction of movement A (or opposite direction) is the most common movement or vibration direction of the seed coulter 6 on impacts since it essentially coincides with the suspension of the seed coulter 6 and since these movements are usually generated by obstacles in the working direction. For this reason the risk would otherwise be greatest for repeated wall bounces in just these directions.

Figures 4b and 4c describe alternative ways to design the front 22b, 22c and the rear wall 24b, 24c with the same or similar effect.

Figure 4d shows an alternative cross-section where both side walls 30 are provided with extending grooves 32 to further prevent bounces. However, the extension of the grooves into the seed pipe 12 should not exceed 1 mm.

The cross-sectional area of the seed pipe 12 should be continuously increasing towards the outlet 26. Hereby one can make the seed pipe 12 narrower below for improved seed placement without increasing the risk of seed blocking.

The embodiments described above are not limiting for the invention which can be varied in a plurality of ways within the framework of the patent claims. Accordingly the seed coulter can be applied on other types of machine with different fastenings. Furthermore for certain embodiments the seed coulter can be somewhat angled relative to the working direction whereby the side walls are not entirely parallel to this direction. Furthermore in similarity to the embodiments described above the seed pipe is not always entirely vertical wherefore the concepts before and behind can be viewed relative to a centre line through the seed pipe.

## Claims

1. seed coulter (6) comprising a coulter tip (14) and a seed pipe (12) with a lower part (20) arranged behind the coulter tip (14) in the intended working direction (A) of the seed coulter (6), which seed pipe (12) comprises a front (22) and rear wall (24), wherein the front wall (22) is displaced forwards in the lower part (20) of the seed pipe (12) relative to the upper part (18) of the seed pipe, so that the distance between the front (22) and rear wall (24) is greater in the lower part (20) of the seed pipe than in its upper part (18), **characterised in that** the rear wall (24) is straight along the entire seed pipe (12) and **in that** the cross-section of the seed pipe (12) is continuously increasing towards an outlet (26).

2. Seed coulter according to Claim 1, ***characterised in* that** the front wall (22) in the lower part (20) of the seed pipe is displaced 10-20 mm forwards relative to the front wall (22) of the upper part (18).

3. Seed coulter according to either one of the preceding claims, ***characterised in* that** the rear wall (24) of the lower part (20) is provided with an opening (28) in its lower end, where the height (h₂) of the displaced part of the front wall (22) is 2-4 times greater than the height (h₁) of the mentioned opening (28).

4. Seed coulter according to any one of the preceding claims, **characterised in that** the cross-section in the vertical plane of the seed pipe (12) is designed so that the front and rear walls (22, 24) form an acute angle relative to the working direction (A) of the seed coulter (6).

5. Seed coulter according to any one of the preceding claims, ***characterised in* that** the seed pipe (12) comprises side walls (30) at which at least one protruding groove (32) is arranged, the extension of which into the seed pipe (12) preferably does not exceed 1 mm.

## Patentansprüche

1. Säschar (6) umfassend eine Scharspitze (14) und ein Särohr (12) mit einem hinter der Scharspitze (14) in der beabsichtigten Arbeitsrichtung (A) des Säschares (6) angeordneten unteren Teil (20), welches Särohr (12) eine Vorderwand (22) und eine Rückwand (24) umfasst, wobei die Vorderwand (22) in dem unteren Teil (20) des Särohres (12) relativ zum oberen Teil (18) des Särohres nach vorne derart versetzt ist, dass der Abstand zwischen der Vorderwand (22) und der Rückwand (24) in dem unteren Teil (20) des Särohres größer als der Abstand in seinem oberen Teil (18) ist, **dadurch gekennzeichnet, dass** die Rückwand (24) entlang dem gesamten Särohr (12) gerade ist, und dass sich der Querschnitt des Särohres (12) zu einem Auslass (26) hin kontinuierlich erhöht.

2. Säschar nach Anspruch 1, **dadurch gekennzeichnet, dass** die Vorderwand (22) in dem unteren Teil (20) des Särohres relativ zur Vorderwand (22) des oberen Teils (18) um 10-20 mm nach vorne versetzt ist.

3. Säschar nach einem der vorgehenden Ansprüche, **dadurch gekennzeichnet, dass** die Rückwand (24) des unteren Teils (20) an ihrem unteren Ende mit einer Öffnung (28) versehen ist, wobei die Höhe h₂ des versetzten Teils der Vorderwand (22) um das 2-4-fache höher ist als die Höhe h₁ der erwähnten Öffnung (28).

4. Säschar nach einem der vorgehenden Ansprüche, **dadurch gekennzeichnet, dass** der Querschnitt in der vertikalen Ebene des Särohres (12) derart ausgestaltet ist, dass die Vorder- und Rückwand (22, 24) einen spitzen Winkel relativ zur Arbeitsrichtung (A) des Säschares (6) bilden.

5. Säschar nach einem der vorgehenden Ansprüche, **dadurch gekennzeichnet, dass** das Särohr (12) Seitenwände (30) umfasst, an welchen mindestens eine vorspringende Nut (32) angeordnet ist, deren Erstreckung in das Särohr (12) hinein vorzugsweise nicht um 1 mm überschreitet.

## Revendications

1. Coutre de semoir (6) comprenant une pointe de coutre (14) et un tube de semences (12) avec une partie inférieure (20) disposée derrière la pointe de coutre (14) dans la direction de travail prévue (A) du coutre de semoir (6), ledit tube de semences (12) comprenant une paroi avant (22) et une paroi arrière (24), la paroi avant (22) étant déplacée vers l'avant dans la partie inférieure (20) du tube de semences (12) par rapport à la partie supérieure (18) du tube de semences, si bien que la distance entre la paroi avant (22) et la paroi arrière (24) est supérieure dans la partie inférieure (20) du tube de semences que dans sa partie supérieure (18), **caractérisé en ce que** la paroi arrière (24) est droite le long du tube de semences entier (12) et **en ce que** la section transversale du tube de semences (12) ne cesse de croître vers une sortie (26).

2. Coutre de semoir selon la revendication 1, **caractérisé en ce que** la paroi avant (22) dans la partie inférieure (20) du tube de semences est déplacée de 10 à 20 mm en avant par rapport à la paroi avant (22) de la partie supérieure (18).

3. Coutre de semoir selon l'une quelconque des revendications précédentes, **caractérisé en ce que** la paroi arrière (24) de la partie inférieure (20) est pourvue d'une ouverture (28) dans son extrémité inférieure, la hauteur (h₂) de la partie déplacée de la paroi avant (22) étant 2 à 4 fois supérieure à la hauteur (h₁) de ladite ouverture (28).

4. Coutre de semoir selon l'une quelconque des revendications précédentes, **caractérisé en ce que** la section transversale dans le plan vertical du tube de semences (12) est conçue si bien que les parois avant et arrière (22, 24) forment un angle aigu par rapport à la direction de travail (A) du coutre de semoir (6).

5. Coutre de semoir selon l'une quelconque des revendications précédentes, **caractérisé en ce que** le tube de semences (12) comprend des parois latérales (30) auxquelles au moins une rainure en saillie (32) est disposée, dont l'extension dans le tube de semences (12) de préférence ne dépasse pas 1 mm.
